# EUROPEAN PATENT SPECIFICATION

(11) **EP 0 606 664 B1**
(45) Date of publication and mention of the grant of the patent: **20.08.1997**
(21) Application number: 93200070.6
(22) Date of filing: 12.01.1993
(51) Int. Cl.: H05B 41/29

(54) **Ballast circuit**
Ballastschaltung
Circuit ballast

(43) Date of publication of application: 20.07.1994
(73) Proprietor: Philips Electronics N.V., 5621 BA Eindhoven (NL)
(72) Inventor: Kulka, Raymond, c/o Int.Octrooibureau B.V., NL-5656 AA Eindhoven (NL)
(74) Representative: Evers, Johannes Hubertus Maria

(56) References cited:
- EP-A- 0 395 776
- EP-A- 0 488 478
- WO-A-92/04808

## Description

The invention relates to a ballast circuit for the operation of a discharge lamp, provided with a DC-AC converter, comprising
- a pair of AC input terminals for connection to a source of low frequency AC supply voltage,
- first and second DC input terminals for connection to said DC-AC converter,
- a rectifier circuit including first and second diodes coupling said AC input terminals to said DC input terminals,
- buffer capacitor means coupled to said DC input terminals,
- first and second switching transistors connected in a series circuit across said first and second DC input terminals,
- a load circuit including lamp connection terminals and inductive means,
- a coupling circuit coupling the load circuit to an AC input terminal,
- means coupled to respective control electrodes of the first and second switching transistors for alternately driving said switching transistors into conduction and cut-off at a high frequency.

A ballast circuit as defined in the first paragraph is described in European Patent Application 92203651.2. Depending on the configuration of the DC-AC-converter the coupling circuit may comprise components but can also be a connection between the load circuit and an AC input terminal having an impedance substantially equal to zero. It has been found that such a ballast circuit has a relatively high power factor, when used to operate a fluorescent lamp of low power. In case a fluorescent lamp consuming a relatively high power is operated with the ballast circuit, however, the power factor is often relatively low or even does not comply with government standards as to line current distortion.

The invention has for its object to provide a ballast circuit that is suitable for operating fluorescent lamps consuming a relatively high power, with a relatively high power factor.

This object is achieved in that the inductive means are comprised in an LC circuit coupled to the discharge lamp, to a first junction point between said first and second switching transistors and to one of said DC input terminals.

The LC circuit effectively splits the energy feedback to the buffer capacitor means, part of it coming via the rectifier means and part of it via the switching transistors or diode means connected in parallel to these switching transistors. By means of a proper choice of components, the DC-AC-converter will operate like a high frequency boost converter so as to raise the voltage on the buffer capacitor means to a value above the peak value of the low frequency AC supply voltage. High capacitor charging currents from the supply source are therefore avoided, which promotes a high power factor and low harmonic content in the supply current. It was found that a ballast circuit according to the invention provides a relatively high power factor even when the fluorescvent lamp operated with the ballast circuit consumes a relatively high power.

Since the current to the buffer capacitor means is partially derived from the DCAC-converter instead of being totally supplied by the source, relatively small buffer capacitor means can be used.

To prevent the fluorescent lamp from carrying a DC-current during lamp operation, it is advantageous when the coupling circuit comprises a first capacitor.

In a preferred embodiment of a ballast circuit according to the invention said LC-circuit comprises first and second inductors connected in series circuit between one end of the discharge lamp and said first junction point and a second capacitor coupled between a junction point of said first and second inductors and said one DC input terminal. It was found that a very efficient feedback of high frequency current to the buffer capacitor means.

In a favourable embodiment of a ballast circuit according to the invention said buffer capacitor means comprises third and fourth capacitors connected in a first series circuit between the DC input terminals and said first and second diodes are connected in a second series circuit between said DC input terminals, and a second junction point between the first and second diodes is coupled to a first AC input terminal and a third junction point between the third and the fourth capacitor is coupled to a second AC input terminal. The rectifier circuit and the buffer capacitor means in this favourable embodiment form a voltage doubler. This feature makes the favourable embodiment very suitable for use when the amplitude of the low frequency AC voltage is relatively low with respect to the lamp voltage.

In a further favourable embodiment of a ballast circuit according to the invention said first and second diodes are connected in a first series circuit between the DC input terminals and third and fourth diodes are connected in a second series circuit between the DC input terminals, and a second junction point between the first and second diodes is coupled to a first AC input terminal and a third junction point between the third and fourth diodes is coupled to a second AC input terminal. This further favourable embodiment is a relatively simple circuit that was found to provide a comparatively high power factor.

In the embodiments described in the last two paragraphs a circuit comprising a series arrangement of a third inductor and a fifth capacitor and connected between the second and third junction points provides a further boosting effect. This further boosting effect makes sure that also the feedback via the rectifier circuit charges the buffer capacitor means to a potential high enough to prevent the occurrence of mains current peaks when the amplitude of the low frequency supply voltage is near its maximum value. In case the coupling circuit is connected to one of the two junction points, it was found that a very efficient feedback of energy via the rectifier circuit from the DC-AC-converter to the buffer capacitor means could be realized.

Unless the means coupled to respective control electrodes of the first and second switching transistors for alternately driving said switching transistors into conduction and cut-off at a high frequency comprise a transformer, it is necessary that diode means are connected in parallel to each of said first and second switching transistors to provide the path for part of the feedback energy.

Pollution of the source of low frequency AC voltage by high frequency currents can be avoided by means of a filter circuit coupled between said AC input terminals and said rectifier circuit.

Preferred embodiments of the invention will now be described in more detail, by way of example, with reference to the accompanying drawing which shows a circuit diagrams of the high frequency electronic ballast arrangements.

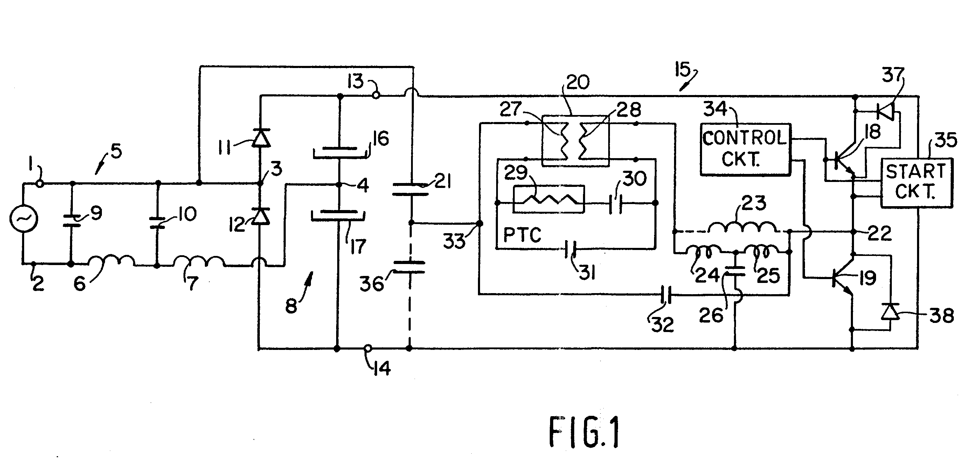

Referring now to Figure 1 in the drawing, a low frequency AC supply voltage, for example 120 volts, 60 Hz, is supplied to a pair of AC input terminals 1, 2 which are coupled to an EMI filter 5 consisting of a first capacitor 9 and a first inductor 6. The EMI filter is in turn coupled to the input terminals 3, 4, of a voltage doubler circuit 8 via a second inductor 7 and a second capacitor 10. The first and second inductors 6 and 7 are serially connected between AC supply terminal 2 and the input terminal 4 of the voltage doubler circuit 8. The first capacitor 9 is coupled across input terminals 1, 2 and the second capacitor 10 is connected between terminal 1 and the junction point between the inductors 6 and 7.

The voltage doubler circuit consists of a pair of diodes 11, 12 serially connected across the DC input terminals 13, 14 of a high frequency DC/AC half bridge converter 15. The voltage doubler circuit further comprises a pair of series connected buffer capacitors 16, 17 coupled in parallel with the series connected diodes 11, 12.

A pair of series connected switching transistors 18 and 19 are coupled to the DC supply terminals 13, 14. Third and fourth diodes 37 and 38 are coupled with reverse polarity across transistors 18 and 19, respectively. One end of a discharge lamp 20, for example, a fluorescent lamp, is coupled via a capacitor 21 to the junction point 3 of the diodes 11, 12. It is known to connect the other end of the discharge lamp 20 to the junction 22 between the switching transistors 18, 19 via an inductor 23. This known connection is shown by means of dashed lines in the drawing. However, in accordance with the invention, in place of the single inductor 23 there is now connected an LC circuit consisting of first and second series connected inductors 24 and 25 with a common junction therebetween coupled to the DC input terminal 14 via a capacitor 26.

The electrodes 27 and 28 of the discharge lamp are interconnected via the series connection of a positive temperature coefficient (PTC) resistor 29 and a capacitor 30. A further capacitor 31 is connected in parallel with the series connection of the PTC resistor and the capacitor 30. The PTC resistor provides a preheat current path for heating the lamp electrodes prior to lamp ignition. This a conventional pre-heat circuit. A snubber capacitor 32 connects the junction 22 to a further junction point 33 and operates to reduce losses in the switching transistors.

A conventional control circuit 34 alternately drives the switching transistors 18 and 19 on and off in a manner such that when one transistor is on the other is off, and vice versa. The control circuit could be I.C. driven, but is preferably a part of the load circuit connected between junction points 22 and 33 and could consist of a transformer having a primary winding in series with inductors 24 and 25 and properly phased first and second secondary windings coupled to the base and emitter electrodes of the switching transistors 18 and 19, respectively. Respective resistors may be connected in series with the secondary windings in the base circuits of the transistors. In this way, a self-oscillating high frequency DC/AC converter can be achieved. The precise method of driving the switching transistors is not critical to the invention and various other drive methods for the transistors are available and would provide satisfactory operation of the circuit.

The lamp 20, capacitor 31, inductors 24, 25 and capacitor 26 essentially make up a resonant circuit which allows the half bridge inverter to self-oscillate at a high frequency.

A start circuit 35 may be provided in order to initiate operation of the high frequency inverter 15. The details of this circuit are also conventional and well known in the prior art and therefore will not be further described.

The input current from the AC supply is a very close approximation of a sinusoidal waveform because of the voltage boosting action via capacitor 21 and isolating diodes 11, 12 which provide a high frequency path for the resonant energy in the lamp circuit to return to the electrolytic buffer capacitors 16, 17 and thereby ensure that the voltage across each of these capacitors is always higher than the line voltage from the AC supply at terminals 1, 2. The capacitor 10 and the inductor 7 are a part of the voltage booster circuit for the buffer capacitors. Energy returning from the resonant circuit via the capacitor 21 is operative to develop a voltage across the inductor 7. This voltage is added to the AC line voltage and will attempt to ring to a higher voltage than the buffer capacitor voltage, but will be clamped by a respective one of the diodes 11 or 12 to the buffer capacitor voltage. Thus, energy is returned through the diodes 11, 12 to the buffer capacitors. An additional voltage boosting action for buffer capacitors 16 and 17 is provided by the LC circuit made up of inductor 25 and capacitor 26. By the use of the LC circuit in place of a single inductor such as the inductor 23, we effectively split the feedback energy supplied to the capacitors 16, 17, a part of which is derived from the lamp via capacitor 21 and another part of which is derived from the LC circuit 24, 25 and 26. The diodes 37 and 38 provide a path to return energy to the buffer capacitors. In the case where a transformer is used to drive the transistors 18 and 19, the diodes 37 and 38 can be eliminated since the secondary windings and the collector-base junctions of the transistors provide a low impedance path for the return of energy to the buffer capacitors. The collector-base junctions of the transistors then provide the diodes' function.

A further voltage boosting operation is provided by the inductor 7 which operates as a sort of voltage source that drives current through the isolating diodes 11 and 12 into the capacitors 16, 17.

In a further modification of the circuit, a capacitor 36 may be connected between junction point 33 and input terminal 14. By a proper choice of the capacitors 21 and 36, the half bridge inverter circuit will act like a high frequency boost converter to raise the voltage on each of the buffer capacitors 16 and 17 to a value above the peak line voltage. This avoids any high capacitive charge currents from the line voltage supply and thereby provides an improvement in the circuit power factor and a reduction in line current harmonics. In view of the improved power factor, the circuit draws a much lower input current.

As mentioned above, since the input ripple current into capacitors 16 and 17 is now partially derived from thehigh frequency half bridge circuit rather than being entirely derived from the low frequency (60 Hz) AC supply, smaller capacitors can now be used and still maintain low ripple voltage.

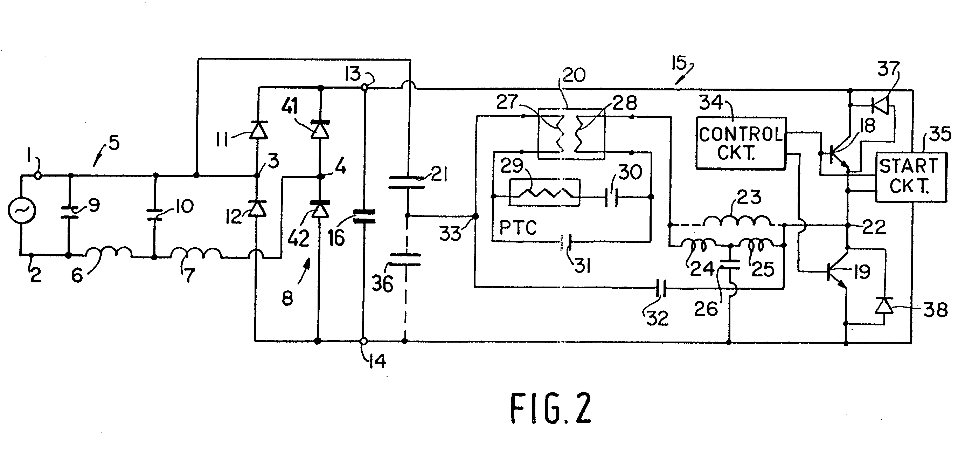

The circuit diagram in figure 2 differs from that in figure 1 in that the voltage doubler circuit (11, 12, 16, 17) has been replaced by a diode bridge (11,12,41,42) and a capacitor 16 connecting the DC terminals 13 and 14. The operation of a circuit according to the circuit diagram in figure 1 and will therefore not be described in detail.

## Claims

1. Ballast circuit for the operation of a discharge lamp (20), provided with a DC-AC converter (15), comprising
- a pair of AC input terminals (1,2) for connection to a source of low frequency AC supply voltage,
- first and second DC input terminals (13,14) for connection to said DC-AC converter (15),
- a rectifier circuit including first and second diodes (11,12) coupling said AC input terminals to said DC input terminals,
- buffer capacitor means (16,17) coupled to said DC input terminals,
- first and second switching transistors (18,19) connected in a series circuit across said first and second DC input terminals,
- a load circuit including lamp connection terminals and inductive means (23),
- a coupling circuit coupling the load circuit to an AC input terminal,
- means coupled to respective control electrodes of the first and second switching transistors for alternately driving said switching transistors into conduction and cut-off at a high frequency,
characterized in that the inductive means are comprised in an LC circuit (24,25,26) coupled to the discharge lamp (20), to a first junction point (22) between said first and second switching transistors and to one of said DC input terminals.

2. Ballast circuit as claimed in Claim 1, wherein said coupling circuit comprises a first capacitor (21).

3. Ballast circuit as claimed in Claim 1 or 2, wherein said LC-circuit (24,25,26) comprises first and second inductors connected in series circuit between one end of the discharge lamp and said first junction point and a second capacitor (24) coupled between a junction point of said first and second inductors and said one DC input terminal.

4. Ballast circuit as claimed in Claim 1, 2 or 3, wherein said buffer capacitor means comprises third and fourth capacitors (16,17) connected in a first series circuit between the DC input terminals and said first and second diodes (11,12) are connected in a second series circuit between said DC input terminals, and wherein a second junction (3) point between the first and second diodes is coupled to a first AC input terminal and a third junction (4) point between the third and the fourth capacitor (16,17) is coupled to a second AC input terminal.

5. Ballast circuit as claimed in Claim 1, 2 or 3, wherein said first and second diodes (11,12) are connected in a first series circuit between the DC input terminals and third and fourth diodes (41,42) are connected in a second series circuit between the DC input terminals, and wherein a second junction point (3) between the first and second diodes is coupled to a first AC input terminal and a third junction point (4) between the third and fourth diodes is coupled to a second AC input terminal.

6. Ballast circuit as claimed in Claim 4 or 5, further provided with a circuit connected between said second and third junction points (3,4) comprising a series arrangement of a third inductor (7) and a fifth capacitor (10).

7. Ballast circuit as claimed in Claim 4, 5 or 6, wherein a terminal of the coupling circuit (21) is connected to the second junction point (3).

8. Ballast circuit as claimed in Claim 4, 5 or 6, wherein a terminal of the coupling circuit (21) is connected to the third junction point (4).

9. Ballast circuit as claimed in any of the preceding Claims, wherein diode means (37,38) are connected in parallel to each of said first and second switching transistor (18,19).

10. Ballast circuit as claimed in any of the preceding Claims, comprising a filter circuit (5) coupled between said AC input terminals and said rectifier means.

## Patentansprüche

1. Ballastschaltung für den Betrieb einer Entladungslampe (20) mit einem Wechselrichter (15), die folgende Bauteile enthält:
- ein Paar von Wechselspannungseingangsklemmen (1, 2) zum Verbinden mit einer Quelle von Niederfrequenz-Wechselspannung,
- erste und zweite Gleichspannungseingangsklemmen (13, 14) zum Verbinden mit dem Wechselrichter (15),
- eine Gleichrichterschaltung mit ersten und zweiten Dioden (11, 12) zum Koppeln der Wechselspannungseingangsklemmen mit den Gleichspannungseingangsklemmen,
- mit den Gleichspannungseingangsklemmen gekoppelte Pufferkondensatormittel (16, 17),
- erste und zweite Schaltkondensatoren (18, 19) in Verbindung mit einer Reihenschaltung über die ersten und zweiten Gleichspannungseingangsklemmen,
- eine Belastungsschaltung mit Lampenverbindungsklemmen und Induktionsmitteln (23),
- eine Koppelschaltung zum Koppeln der Belastungsschaltung mit einer Wechselspannungseingangsklemme,
- mit jeweiligen Steuerelektroden der ersten und zweiten Schalttransistoren gekoppelte Mittel zum andersartigen Treiben der Schalttransistoren in den leitenden Zustand und zum Abschneiden auf einer hohen Frequenz,
dadurch gekennzeichnet, daß die Induktionsmittel in einer mit der Entladungslampe (20), mit einem ersten Knotenpunkt (22) zwischen den ersten und zweiten Schalttransistoren und mit einer der Gleichspannungseingangsklemmen gekoppelten LC-Schaltung (24, 25, 26) enthalten sind.

2. Ballastschaltung nach Anspruch 1, worin die Koppelschaltung einen ersten Kondensator (21) enthält.

3. Ballastschaltung nach Anspruch 1 oder 2, worin die LC-Schaltung (24, 25, 26) erste und zweite Induktoren in Reihenschaltung zwischen dem einen Ende der Entladungslampe und dem ersten Knotenpunkt sowie einenzweiten Kondensator (24) zwischen einem Knotenpunkt der ersten und zweiten Induktoren und der einen Gleichspannungsklemme enthält.

4. Ballastschaltung nach Anspruch 1, 2 oder 3, worin die Pufferkondensatormittel dritte und vierte Kondensatoren (16, 17) enthalten, die in einer ersten Reihenschaltung zwischen den Gleichspannungs-Eingangsklemmen angeschlossen sind, und die ersten und zweiten Dioden (11, 12) in einer zweiten Reihenschaltung zwischen den Gleichspannungs-Eingangsklemmen angeschlossen sind, und ein zweiter Knotenpunkt (3) zwischen den ersten und zweiten Dioden mit einer ersten Wechselspannungs-Eingangsklemme und ein dritter Knotenpunkt (4) zwischen dem dritten und vierten Kondensator (16, 17) mit einer zweiten Wechselspannungs-Eingangsklemme gekoppelt sind.

5. Ballastschaltung nach Anspruch 1, 2 oder 3, worin die ersten und zweiten Dioden in einer ersten Reihenschaltung zwischen den Gleichspannungs-Eingangsklemmen angeschlossen und dritte und vierte Dioden (41, 42) in einer zweiten Reihenschaltung zwischen den Gleichspannungs-Eingangsklemmen geschaltet sind, ein zweiter Knotenpunkt (7) zwischen den ersten und zweiten Dioden mit einer ersten Wechselspannungs-Eingangsklemme und ein dritter Knotenpunkt (4) zwischen den dritten und vierten Dioden mit einer zweiten Wechselspannungs-Eingangsklemme gekoppelt ist.

6. Ballastschaltung nach Anspruch 4 oder 5, außerdem mit einer Schaltung zwischen den zweiten und dritten Knotenpunkten (3, 4) mit einer Reihenschaltung eines dritten Induktors (7) und eines fünften Kondensators (10).

7. Ballastschaltung nach Anspruch 4, 5 oder 6, worin eine Klemme der Koppelschaltung (21) mit dem zweiten Knotenpunkt (3) verbunden ist.

8. Ballastschaltung nach Anspruch 4, 5 oder 6, worin eine Klemme der Koppelschaltung (21) mit dem dritten Knotenpunkt (4) verbunden ist.

9. Ballastschaltung nach einem oder mehreren der vorangehenden Ansprüche, worin Diodenmittel (37, 38) zu jedem der ersten und zweiten Schalttransistoren (18, 19) parallelgeschaltet sind.

10. Ballastschaltung nach einem oder mehreren der vorangehenden Ansprüche, mit einer Filterschaltung, die zwischen den Wechselspannungs-Eingangsklemmen und den Gleichrichtmitteln gekoppelt ist.

## Revendications

1. Circuit ballast servant au fonctionnement d'une lampe à décharge (20), muni d'un convertisseur courant continu - courant alternatif (15), comprenant
- une paire de bornes d'entrée de courant alternatif (1, 2) pour la connexion à une source de tension d'alimentation alternative à basse fréquence,
- des première et deuxième bornes d'entrée de courant continu (13, 14) pour la connexion audit convertisseur courant continu - courant alternatif (15),
- un circuit redresseur comprenant des première et deuxième diodes (11, 12) assurant le couplage desdites bornes d'entrée de courant alternatif auxdites bornes d'entrée de courant continu,
- un moyen de condensateur tampon (16, 17) couplé auxdites bornes d'entrée de courant continu,
- des premier et deuxième transistors de commutation (18, 19) montés dans un circuit en série aux bornes desdites première et deuxième bornes d'entrée de courant continu,
- un circuit de charge comprenant des bornes de connexion de lampe et des moyens inductifs (23),
- un circuit de couplage assurant le couplage du circuit de charge à une borne d'entrée de courant alternatif,
- des moyens couplés aux électrodes de commande respectives des premier et deuxième transistors de commutation pour porter alternativement lesdits transistors de commutation en conduction et provoquer le blocage à une fréquence élevée,
- caractérisé en ce que les moyens inductifs sont insérés dans un circuit LC (24, 25, 26) couplé à ladite lampe à décharge (20), à un premier point de jonction (22) entre lesdits premier et deuxième transistors de commutation et à l'une desdites bornes d'entrée de courant continu.

2. Circuit ballast selon la revendication 1, dans lequel ledit circuit de couplage comporte un premier condensateur (21).

3. Circuit ballast selon la revendication 1 ou 2, dans lequel ledit circuit LC (24, 25, 26) est muni de premier et deuxième inducteurs montés dans un circuit en série entre une extrémité de la lampe à décharge et ledit premier point de jonction et un deuxième condensateur (24) couplé entre un point de jonction desdits premier et deuxième inducteurs et ladite borne d'entrée de courant continu.

4. Circuit ballast selon la revendication 1, 2 ou 3, dans lequel ledit moyen de condensateur tampon comprend des troisième et quatrième condensateurs (16, 17) montés dans un premier circuit en série entre les bornes d'entrée de courant continu et lesdites première et deuxième diodes (11, 12) sont montées dans un deuxième circuit en série entre lesdites bornes d'entrée de courant continu, et dans lequel un deuxième point de jonction (3) entre lesdites première et deuxième diodes est couplé à une première borne d'entrée de courant alternatif et un troisième point de jonction (4) entre les troisième et quatrième condensateurs (16, 17) est couplé à une deuxième borne d'entrée de courant alternatif.

5. Circuit ballast selon la revendication 1, 2 ou 3, dans lequel lesdites première et deuxième diodes (11, 12) sont connectées dans un premier circuit en série entre les bornes d'entrée de courant continu et les troisième et quatrième diodes (41, 42) sont connectées dans un deuxième circuit en série entré les bornes d'entrée de courant continu, et dans lequel un deuxième point de jonction (3) entre les première et deuxième diodes est couplé à une première borne d'entrée de courant alternatif et un troisième point de jonction (4) entre les troisième et quatrième diodes est couplé à une deuxième borne d'entrée de courant alternatif.

6. Circuit ballast selon la revendication 4 ou 5, muni en outre d'un circuit connecté entre lesdits deuxième et troisième points de jonction (3,4) comprenant un montage en série d'un troisième inducteur (7) et d'un cinquième condensateur (10).

7. Circuit ballast selon la revendication 4, 5 ou 6, dans lequel une borne du circuit de couplage (21) est connectée au deuxième point de jonction (3).

8. Circuit ballast selon la revendication 4, 5 ou 6, dans lequel une borne du circuit de couplage (21) est connectée au troisième point de jonction (4).

9. Circuit ballast selon l'une des revendications précédentes, dans lequel les moyens de diode (37, 38) sont montés en parallèle à chacun desdits premier et deuxième transistors de commutation (18, 19).

10. Circuit ballast selon l'une des revendications précédentes, muni d'un circuit de filtrage (5) couplé entre lesdites bornes d'entrée de courant alternatif et lesdits moyens redresseurs.
